Europäisches Patentamt

European Patent Office

Office européen des brevets

(11) Publication number: **0 430 496 A1**

# EUROPEAN PATENT APPLICATION

(21) Application number: 90312461.8

(22) Date of filing: 15.11.90

(51) Int. Cl.5: **C08K 3/34**, C08L 25/06, C08L 25/10, C08L 69/00

(30) Priority: 24.11.89 GB 8926568

(43) Date of publication of application:
05.06.91 Bulletin 91/23

(84) Designated Contracting States:
AT BE DE ES FR GB IT NL SE Bulletin

(71) Applicant: CABOT PLASTICS BELGIUM S.A.
Rue Emil Vandervelde 1313
B-3341 Ans (Loncin)(BE)

(72) Inventor: Tailfer, Roland
Solwaster 66
B-4845 Sart-Lez-Spa(BE)

(74) Representative: Attfield, Donald James et al
BROOKES, MARTIN & WILSON Prudential
Buildings 5 St. Philip's Place
Birmingham B3 2AF(GB)

(54) Improvements relating to polymeric material.

(57) Disclosed is a clear transparent polystyrene material containing 5-20% w/w of a talc having a brightness > 75%, an ignition loss at 750° C < 6% w/w, an iron content expressed as $Fe_2O_3$, of less than 0.9% an $SiO_2/MgO$ ratio of 1.75 and a particle size of 99% < 50$\mu$. The product has improved mechanical strength compared with an unfilled material and is suitable for use in transparent polystyrene applications.

EP 0 430 496 A1

## IMPROVEMENTS RELATING TO POLYMERIC MATERIAL

The present invention is concerned with improvements in polymeric materials and in particular in respect of transparent polymers such as transparent polystyrene transparent styrene-butadiene co-polymers, or transparent polycarbonate containing talc as a filler.

The use of fillers in rubbers, high and low density polyethylene and polypropylene and other polymers such as polystyrene and polycarbonate, is well known. They are generally employed to improve specific properties of the polymer or simply to reduce the overall costs of articles made from the polymer. Thus calcium carbonate has been used in small quantities in pigmented high impact polystyrene but the deterioration in mechanical properties, such as brittleness, means that it can only be used where the mechanical properties of the polymer are not of paramount importance, for example in the manufacture of disposable polystyrene cups. Not only does the deterioration of mechanical properties of polystyene containing finely divided calcium carbonate as a filler reduce the range of applications in which it may be employed, but the presence of the calcium carbonate also increases the opacity of the polymer thereby making it unsuitable for use in place of general purpose polystyrene where optical clarity is a required property. U.S. Patent No. 3,976,608 discloses the addition of a wide range of fillers to polystyrene in amounts from 5 - 50% by weight of the polystyrene. The fillers are included in the polystyrene by blending the polystyrene with a polystyrene masterbatch containing, by weight, up to 40 parts per hundred parts of resin (phr) of an oil and 10 - 200 phr of a filler. Whilst the resultant polymer has "acceptable" properties for some end uses, there is a general falling off in properties resulting in lower impact resistance, lower flexural resistance and lower heat distortion resistance. In addition the resulting polymers will also be generally opaque.

We have now found that certain talcs can be used as a filler in clear transparent polymers such as transparent polystyrene, transparent styrene-butadiene co-polymers and transparent polycarbonate without adversely affecting the mechanical properties or the optical clarity in a way that makes the polymer unsuitable for conventional applications. Surprisingly the presence of from 5% to 10% w/w of the talc improves the flexural strength of clear transparent polymers and co-polymers and from 5% to 30% w/w of the talc may be used without significant deterioration in Polymer properties such as impact strength of styrenics. The presence of the talc also surprisingly reduces the brittleness caused by orientation of the polymer.

Accordingly the present invention provides a clear transparent polymeric material containing from 5 to 30% w/w, preferably 5-20% w/w of talc.

The talc has the following characteristics:

| | |
|---|---|
| Brightness FMY/L* | > 75% |
| Most preferably | > 88% |
| Ignition loss at 950° C | < 10% $^w$/w |
| Most preferably | < 6% $^w$/w |
| Iron content | < 3% $^w$/w |
| SiO$_2$/MgO ratio | 1.5-2.2 |
| Particle size | 99% < 50 $\mu$ |

*Measured on an Elepho colourimeter using a green filter.

Preferably the polymeric material is transparent polystyrene, transparent styrene-butadiene copolymer or transparent polycarbonate.

In examples 1-9 the polystyrene homopolymer, and the polystyrene-butadiene copolymers used were as follows:-

Edistir N1921 (Trade Mark), a general purpose transparent polystyrene sold by Montedison Company,

K Resin (Trade Mark) a transparent styrene-butadiene copolymer sold by Phillips Petroleum Company,

Styrolux 684D (Trade Mark) a transparent styrene-butadiene copolymer sold by BASF;

having the following properties:

| Property | Edistir | K Resin | Styrolux |
|---|---|---|---|
| | polymer | copolymer | copolymer |
| Vicat Spt. (1KG) °C | 88 | 87 | 83 |
| Melt/flow index: 200°C/5kg;g/10 min. | 22 | 8 | 12 |
| Deflection at break: ASTM D 790 mm | 5.2[1] | - | - |
| Elastic modulus (in flex) ASTM D 790; $N/mm^2$ | 3200[1] | 1413[4] | - |
| Elastic modulus (in flex) DN 53457; $N/mm^2$ | - | - | 1450 |
| Flexural strength at break ASTM D 790; $N/mm^2$ | 55 | 37.2[4] | |
| Flexural strength at break DIN 53455; $N/mm^2$ | - | - | 40 |
| Elongation at break ASTM D 638; % | 1.4[2] | 160[4] | |
| Elongation at break DIN 53455; % | - | - | 250 |
| Tensile Strength at break DIN 53455; $N/mm^2$ | - | 26[4] | 26 |
| Tensile Strength at break ASTM D 638; $N/mm^2$ | 38[2] | - | - |
| IZOD (notched) impact strength ISO 80; J/M | - | - | 4 |
| IZOD (notched) impact strength ASTM D256; J/M at 23°C | 15[3] | 41[4] | |

1. Specimen dimensions: 12.7 x 6.3 x 127 mm
2. Specimen dimensions: 3.2 mm thick dumbell
3. Specimen dimensions: 12.7 x 12.7 mm section
4. Specimen moulded in accordance with ASTM D 1897

The talcs used in the Examples were as follows:
Luzenac OOS and Luzenac 10 MOOS (Trade Name) sold by Talc de Luzenac, Toulouse, France.
Magsil Diamond - Sold by Richard Baker Harrison Group, Ilford, Essex, United Kingdom,
having the following characteristics

| | Luzenac OOS | Luzenac 10 MOOS | Magsil Diamond |
|---|---|---|---|
| Brightness FMY/L % | 87.4 | 89.7 | 93 |
| Ignition loss % (750°C) | 1.5 | 1.5 | - |
| (950°C) | <10 | <10 | 5.67 |
| Iron content ($Fe_2O_3$) % | 0.9 | 0.9 | 0.73 |
| $SiO_2/MgO$ ratio | 1.75 | 1.75 | 1.94 |
| Particle Size | 99% < 50 $\mu$ | 99% < 10 $\mu$ | 99% < 40 $\mu$ |

Examples 1 - 5

In these examples the polymer used was
Edistir N1921(RN) transparent polystyrene. The polystyrene was compounded in any conventional equipment, e.g. a Banbury mixer, with 10% w/w and 20% w/w Luzenac 10 MOOS and Luzenac OOS talcs until a homogenous dispersion was obtained.

The filled polymers were injection moulded by standard techniques into 20mm thick plates and formed into ISO impact bars. Plates and bars were cut into 25mm wide strips in the longitudinal and transverse directions to take account of any orientation that may have taken place during moulding. These strips were then tested to breaking in a 3 point bending rig using 50mm span and 10mm rods. The tests were carried out according to ASTM D790 and results were given in Table 1 below.

3

TABLE 1

| | Stress at Break | Deflection at Break |
|---|---|---|
| Experiment/Polymer | Kg | MM |
| 1. EN[1] (control) | | |
| Longitudinal | 9.4 | 4 |
| Transverse | 4.5 | 2 |
| 2. EN[1] + 10% Talc[2] | | |
| Longitudinal | 9.5 | 4 |
| Transverse | 6 | 2 |
| 3. EN[1] + 20% Talc[2] | | |
| Longitudinal | 8.5 | 3.25 |
| Transverse | 6.2 | 1.75 |
| 4. EN[1] + 10% Talc[3] | | |
| Longitudinal | 10.75 | 4.25 |
| Transverse | 7.10 | 2.75 |
| EN[1] + 20% Talc[3] | | |
| Longitudinal | 8.5 | 3.25 |
| Transverse | 6.0 | 2 |

1. Edistir N1921 polymer
2. Luzenac 10 MOOS talc
3. Luzenac OOS talc

From a review of the test data in Table 1 it can be seen that the mechanical properties of the talc filled homopolymer are substantially the same or improved compared with those of the control.

From visual observations on 3mm thick samples, the optical properties of the homopolymer were retained to an extent sufficient to allow applications of the talc containing homopolymer as a transparent composition.

Examples 6 + 7

20% w/w Magsil Diamond talc was compounded with K Resin styrene butadiene copolymer, and the mechanical properties tested. A master batch of polymer and 50% w/w talc was prepared and the master batch then diluted to 20% talc with K Resin during injection moulding. Compositions of the polymers tested and the mechanical test results are given in Table 2 below.

Izod notched and unnotched was determined according to 150 R 180.

## TABLE 2

| | 6 | 7 |
|---|---|---|
| Composition | 100% K Resin (Control) | 80% K Resin 20% Talc |
| Mechanical properties | | |
| Izod Unnotched KJM$^{-2}$ | No Break | No Break |
| Izod Notched, KJM$^{-2}$ | 7.28 | 9.58 |
| Flexural Modulus, MPa | 990 | 1130 |

From visual observations on 3mm thick samples optical properties of the copolymer were retained to an extent sufficient to allow application of the talc containing homopolymer as a transparent composition.

The results indicate that the addition of the talc to clear polystyrene improves its mechanical strength. The stiffness increase occurred without any significant corresponding decrease in impact properties.

Examples 8 + 9

20% w/w Magsil Diamond talc was compounded with a mixture of Edistir polystyrene homopolymer and Styrolux transparent styrene-butadiene copolymer and the mechanical properties of the mixture tested.

A master batch of copolymer and 50% w/w talc was prepared and the master batch then diluted to 20% talc by the addition of Edistir homopolymer during injection moulding. Compositions of the polymers tested and the mechanical test results are given in table 3 below.

TABLE 3

| | 8 | 9 |
|---|---|---|
| Example | 25% Styrolux 75% Edistir control | 20% Styrolux 60% Edistir 20% talc |
| Mechanical Properties | | |
| Izod Unnotched, KJM$^{-2}$ | 6.8 | 8.4 |
| Izod Notched, KJM$^{-2}$ | 5.54 | 4.17 |
| Flexural Modulus, MPa | 2213 | 2722 |

The data in table 3 shows that the mechanical properties of the copolymer containing talc are at least substantially the same as for the control.

From a visual assessment on 3mm thick samples the optical properties of the homo and copolymers were retained in the homopolymer copolymer/talc mixture to an extent suffient to allow application as a transparent composition.

EXAMPLE 10

In this example the polymer used was MAKROLON [R] 3200 polycarbonate polymer sold by Bayer. The talc was MAGSIL DIAMOND.

The mechanical properties on injected molded samples were compared a significant increase of both tensile strength and rigidity noted.

TABLE

| Composition | 100% Makrolon[R] 3200 | 80% Makrolon and 20% talc |
|---|---|---|
| Tensile strength | 6.49 daN/mm$^2$ | 7.54 daN/mm$^2$ |
| Elongation | 54.2% | 5.54% |
| Rigidity (E mo.) | 202 daN/mm$^2$ | 324 daN/mm$^2$ |

The significant improvement of the rigidity causes a lower impact resistance of the product which remains however at a high level, over 50 KJ/m$^2$ for an unnotched sample.

From visual observation on 3mm thick samples, optical properties of the polymer were retained to an extent sufficient to allow application of the talc containing polymer as a transparent composition.

The presence of talc in the polycarbonate has two highly desirable effects when used in greenhouses namely;

(a) absorption of the far infra red radiations, improving the "greenhouse effect" and

(b) extruded sheets can be produced with a structured surface, without need for specific extra work step, with the result that a diffuse light, without loss of brightness, enters the greenhouse. This effect is known to be extremely beneficial to the growth of plants in such greenhouses.

**Claims**

1. A clear transparent polymeric material containing from 5 to 30% w/w of talc, wherein the talc has the following characteristics:-

| Brightness FMY/L | > 75% |
|---|---|
| Ignition loss at 950°C | < 10% $^w$/w |
| Iron content | < 3% $^w$/w |
| SiO$_2$/MgO ratio | 1.5-2.2 |
| Particle size | 99% < 50 $\mu$ |

2. A polymeric material according to claim 1 wherein the polymer is transparent polystyrene, transparent styrene-butadiene copolymer or transparent polycarbonate.

3. A polymeric material according to claim 1 or claim 2 wherein the polymeric material contains from 5-20% w/w of talc.

4. A polymeric material according to claim 3 wherein the talc has:

a brightness F MY/L > 88% and an ignition loss at 950°C < 6% w/w.

5. A polymeric material according to claim 3 wherein the talc has:

a brightness FMY/L of 87.4%

an ignition loss @ 750°C of 1.5%

an iron content (Fe$_2$O$_3$) of 0.9%, and

an SiO$_2$/MgO ratio of 1.75

6. A polymeric material according to claim 3 wherein the talc has:-

a brightness FMY/L of 89.7%

an ignition loss @ 750°C of 1.5%

an iron content (Fe$_2$O$_3$) of 0.9%

an SiO$_2$/Mg O ratio of 1.75%, and

a particle size of 99% < 10 $\mu$

7. A polymeric material according to claim 4 wherein the talc has:-

a brightness FMY/L of 93%

an ignition loss @ 950 $^\circ$ C of 5.67%
an iron content (Fe$_2$O$_3$) of 0.73%
an SiO$_2$ /Mg O ratio of 1.94, and
a particle size of 99% < 40 $\mu$

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | SOCIETY OF PLASTICS ENGINEERS TECHNICAL PAPERS, vol. 23, 1977, pages 357-361; J.A. RADOSTA: "New property combinations for impact resistant mineral filled polystyrene" * Pages 357-358, paragraph: "Results and discussion" * | 1-7 | C 08 K 3/34<br>C 08 L 25/06<br>C 08 L 25/10<br>C 08 L 69/00 |

TECHNICAL FIELDS
SEARCHED (Int. Cl.5)

C 08 K
C 08 L

The present search report has been drawn up for all claims

| Place of search | Date of completion of the search | Examiner |
|---|---|---|
| THE HAGUE | 11-02-1991 | SIEMENS T. |

EPO FORM 1503 03.82 (P0401)